# EUROPEAN PATENT APPLICATION

(11) **EP 1 737 220 A1**
(43) Date of publication of application: **27.12.2006**
(21) Application number: 06252995.3
(22) Date of filing: 09.06.2006
(51) Int. Cl.: H04N 5/44

(54) **Video processing apparatus**

(30) Priority: 20.06.2005 KR 2005053177
(71) Applicant: Samsung Electronics Co., Ltd., Suwon-si Gyeonggi-do (KR)
(72) Inventor: Okanno, Yasuhiro, Yeongtong-gu Suwon-si Gyeonggi-do (KR)
(74) Representative: Brandon, Paul Laurence

(57) **Abstract**

A video processing unit (130) to receive a first video signal, a second video signal, and a control signal for the second video signal, and selectively output the first or second video signal and the control signal; a video signal processor (150) to process the first or second video signal and the control signal from the switching unit to be displayed on the display unit; and a controller (170) to control the switching unit to switch an output thereof. Thus, in the video processing apparatus, a video signal and a corresponding control signal are synchronized with each other without increasing a production cost.

## Description

The present invention relates to video processing apparatus.

A video processing apparatus, such as a television (TV), receives a video signal, such as a digital TV broadcasting signal, a cable TV broadcasting signal, from a broadcasting station, and processes the received video signal to thereby display a predetermined picture.

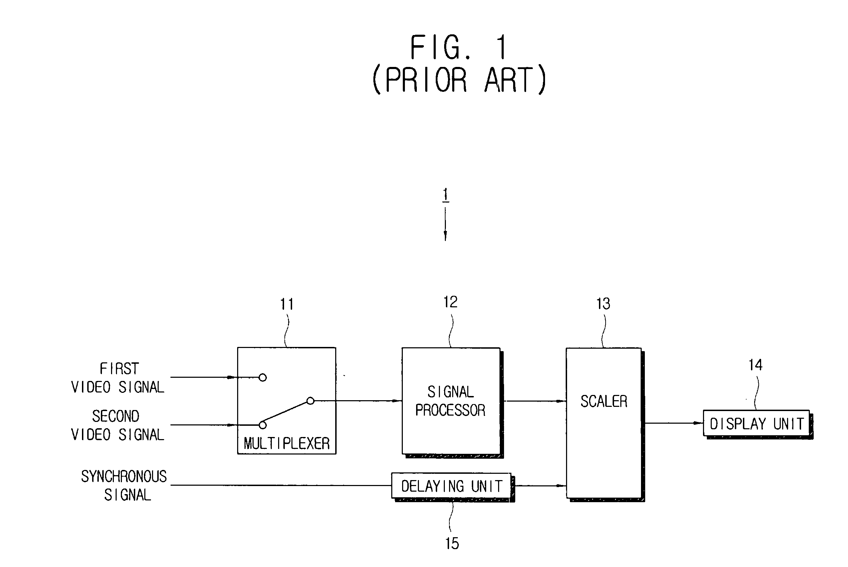

A conventional video processing apparatus is schematically illustrated in FIG. 1. As shown in FIG. 1, a video processing apparatus 1 includes a multiplexer 1 receiving a first video signal and a second video signal and outputs one of the first and second video signals according to a user's selection; a signal processor 12 processing the first or second video signal selected by the multiplexer 11, e.g., filtering noise from the selected video signal; and a scaler 13 processing the processed first or second video signal to be properly displayed on a display unit 14 having a display panel.

Further, the video processing apparatus 1 can process a control signal as well as the first or second video signal. The control signal includes a data enable synchronous signal, a horizontal synchronous signal, a vertical synchronous signal, a clock signal, etc., which define a relative position of the signal, starting and ending points of the processing operation, etc. Such control signals should be processed separately from the first or second video signal, so that the control signal can be directly input to the scaler 13 without passing through the multiplexer 11 and the signal processor 12 except that the signal processor 12 is capable of processing the control signal separately.

In the meantime, when the first or second video signal and the corresponding control signal are processed by separate circuits or buses, respectively, the video signal and the control signal may be processed in different time. Particularly, in the case where the control signal, e.g., the data enable synchronous signal is closely related with first or second video signal, if the first or second video signal and the corresponding control signal are processed in different time, a problem arises in that a predetermined picture is not normally displayed due to information error or no information.

To solve the foregoing problem, the video processing apparatus 1 additionally includes a delaying unit 15 to delay the control signal so that the control signal can be processed at a proper time considering a processing time of the first or second video signal. The delaying unit 15 can be a logic circuit which determines a delaying time on the basis of an amount of time taken to process the first or second video signal via the multiplexer 11 and the signal processor 12.

However, the delaying unit 15 increases the production cost of the video processing apparatus 1. Particularly, in the case where the delaying unit 15 is provided to adjust the delaying time corresponding to the processing time of the multiplexer 11 and the signal processor 12, the production cost of the video processing apparatus 1 is further increased.

It is an aim of preferred embodiments of the present invention to provide a video processing apparatus, in which a video signal and a corresponding control signal are synchronized with each other without increasing the production cost.

According to an aspect of the present invention, there is provided a video processing apparatus with a display unit, comprising a switching unit to receive a first video signal, a second video signal, and a control signal for the second video signal, and selectively output the first or second video signal and the control signal; a video signal processor to process the first or second video signal and the control signal from the switching unit to be displayed on the display unit; and a controller to control the switching unit to switch an output thereof.

Suitably, the switching unit comprises a multiplexer.

Suitably, the video signal processor comprises a scaler.

Suitably, the control signal includes a synchronous signal to adjust a position of a picture based on the second video signal.

Suitably, the video processing apparatus further comprises a noise damper to filter noise out of the output of the switching unit or to pass the output of the switching unit.

Suitably, the second video signal has a smaller bit number than the first video signal, and each of the switching unit and the noise damper comprises input and output ports corresponding to the bit number of the first video signal, and receives and outputs the first video signal, the second video signal and the control signal in parallel through the input and output ports.

Suitably, the video signal processor comprises video signal input ports corresponding to the bit number of the first video signal, and a control signal input port corresponding to the control signal; and the output ports of the noise damper are connected to the video signal input ports of the video signal processor, respectively, and the output port corresponding to the control signal among the output ports of the noise damper is connected to the control signal input port.

Suitably, the video signal processor comprises video signal input ports corresponding to the bit number of the first video signal, and a control signal input port corresponding to the control signal; the output ports of the noise damper except the output port corresponding to the control signal are connected to a part of the video signal input ports of the video signal processor; and the video processing apparatus further comprises a demultiplexer to selectively connect the output port corresponding to the control signal among the output ports of the noise damper with either of the video signal input port which is not connected or the control signal input port of the video signal processor.

The present invention will become apparent and more readily appreciated from the following description of exemplary embodiments thereof, taken in conjunction with the accompany drawings of which:
FIG. 1 is a block diagram schematically illustrating a conventional video processing apparatus;
FIG. 2 is a block diagram schematically illustrating a video processing apparatus according to an exemplary embodiment of the present invention;

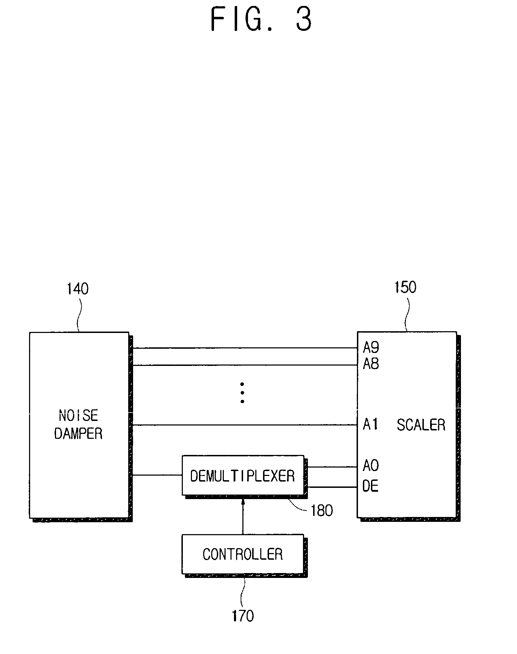

FIG. 3 is a block diagram partially illustrating a video processing apparatus according to another exemplary embodiment of the present invention; and
FIGS. 4 and 5 are information tables showing input and output of a multiplexer according to an exemplary embodiment of the present invention.

Reference will now be made in detail to the exemplary embodiments of the present invention, examples of which are illustrated in the accompanying drawings, wherein like reference numerals refer to like elements throughout. The exemplary embodiments are described below so as to explain the present invention by referring to the figures.

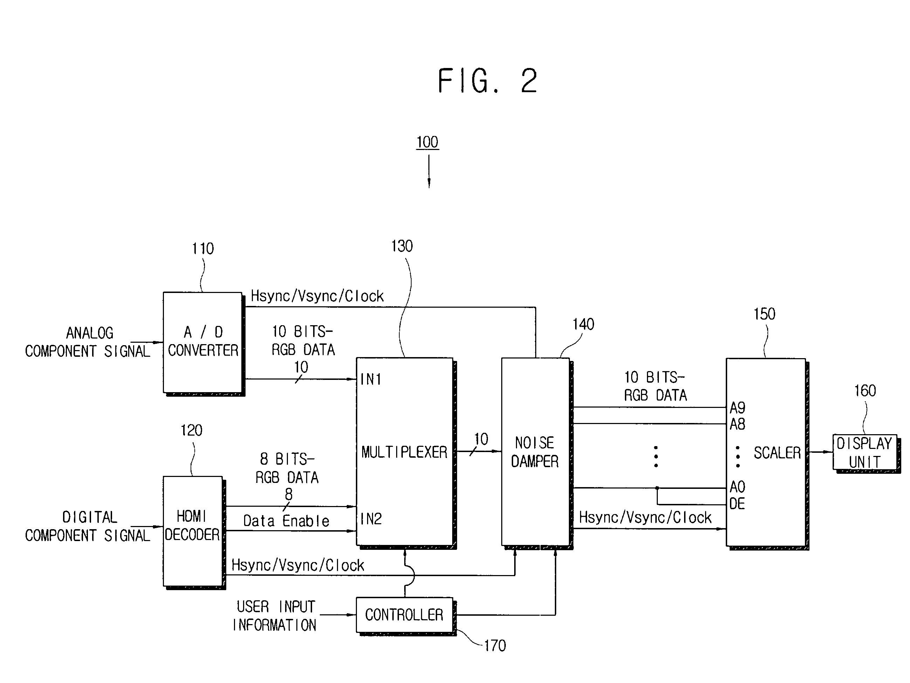

FIG. 2 is a block diagram schematically illustrating a video processing apparatus according to an exemplary embodiment of the present invention. According to an exemplary embodiment of the present invention, a video processing apparatus 100 may be a TV that receives a video signal such as a digital TV broadcasting signal, a cable TV broadcasting signal or the like from a broadcasting station and processes the received video signal to thereby display a predetermined picture. Alternatively, the video processing apparatus 100 according to an embodiment of the present invention may receive the video signal from various devices such as a video cassette recorder (VCR), a digital versatile disc (DVD) player, a digital camera, a computer system, etc., and process the received video signal to thereby display a predetermined picture.

As shown in FIG. 2, the video processing apparatus 100 according to an exemplary embodiment of the present invention includes an analog-to-digital (A/D) converter 110, a high-definition multimedia interface (HDMI) decoder 120, a multiplexer 130, a noise damper 140, a scaler 150, a display unit 160, and a controller 170. The A/D converter 110 receives an analog component signal and converts the analog component signal into a digital video signal. For example, the A/D converter 110 converts the analog component signal into red, green and blue (RGB) data of 10 bits. That is, the A/D converter 110 outputs the video signal of which 10 bits are allocated to each of R, G and B data. In this exemplary embodiment, the 10-bit RGB data output from the A/D converter 110 will be described as an example of a first video signal. Further, the A/D converter 110 outputs not only the 10-bit RGB data but also a control signal corresponding to the video signal based on the analog component signal. For example, the A/D converter 110 according to an exemplary embodiment of the present invention outputs a horizontal synchronous signal (Hsync), a vertical synchronous signal (Vsync), and a clock synchronous signal (clock) as the control signals.

The HDMI decoder 120 receives a digital component signal, and decodes the received digital component signal, thereby recovering an original video signal. According to an embodiment of the present invention, the HDMI decoder 120 converts the received digital component signal into 8-bit RGB data. That is, the HDMI decoder 120 outputs the video signal of which 8 bits are allocated to each of R, G and B data. In this exemplary embodiment, the 8-bit RGB data output from the HDMI decoder 120 will be described as an example of a second video signal. Further, the HDMI decoder 120 outputs not only the 8-bit RGB data but also a control signal corresponding to the video signal based on the digital component signal. For example, the HDMI decoder 120 according to an exemplary embodiment of the present invention outputs a data enable synchronous signal, a horizontal synchronous signal (Hsync), a vertical synchronous signal (Vsync), and a clock synchronous signal (clock) as the control signals. Here, the data enable synchronous signal defines a position of the video signal with regard to processing the video signal. For example, the data enable synchronous signal may be information determining where a picture will be displayed on the display unit 160.

The multiplexer 130 is connected to output terminals of the A/D converter 110 and the HDMI decoder 120, and receives data in parallel from a plurality of 10-bit buses. According to an exemplary embodiment of the present invention, the multiplexer 130 can have input and output ports corresponding to a number of bits of the video signal output from the A/D converter 110. For example, the multiplexer 130 can receive the 10-bit RGB data (hereinafter, referred to as "first RGB data") from the A/D converter 110 through three 10-bit buses (refer to "IN1" of FIG. 2), and receive the 8-bit RGB data (hereinafter, referred to as "second RGB data" from the HDMI decoder 120 through three 10-bit buses (refer to "IN2" of FIG. 2).

Further, the multiplexer 130 can receive the data enable synchronous signal corresponding to the second RGB data through one of the other two lines except one line allocated to the second 8-bit RGB data among the 10-bit buses connected to the HDMI decoder 120.

Here, the multiplexer 130 selectively outputs one among the first RGB data, the second RGB data and the corresponding data enable synchronous signal on the basis of a selection signal output from the controller 170. In this case, the controller 170 either receives the analog component signal or the digital component signal through a predetermined selection input (not shown) according to a user's selection, and generates a selection signal based on user input information, thereby transmitting the selection signal to the multiplexer 130. In this exemplary embodiment, the multiplexer 130 will be illustrated as an example of a switching unit according to an exemplary embodiment of the present invention.

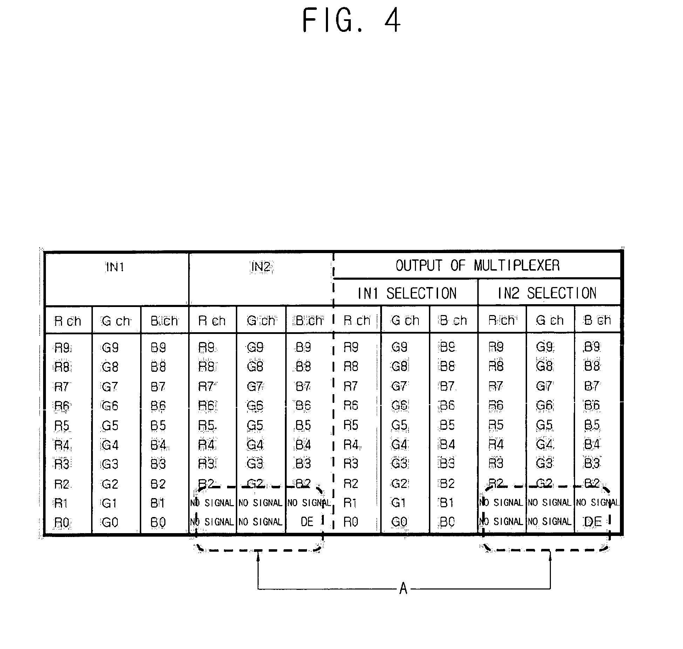

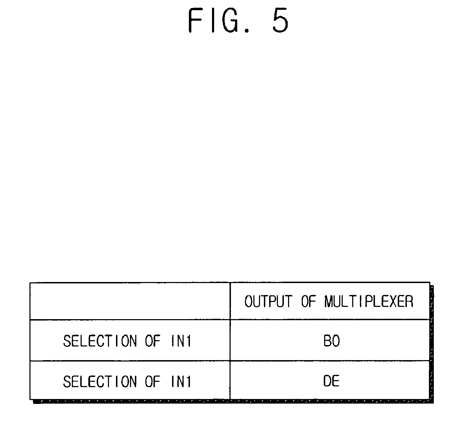

FIGS. 4 and 5 are information tables showing input and output of a multiplexer according to an exemplary embodiment of the present invention. As shown in FIG. 4, the input port IN1 of the multiplexer 130 receives the first RGB data, some ports of the input port IN2 receives the second RGB data, and the other ports of the input port IN2 are not allocated to the signals but one port of a B channel thereof receives the data enable synchronous signal (refer to "A" of FIG. 4). As shown in FIGS. 4 and 5, the first RGB data is output (refer to "BO" of FIG. 5) when the input port IN1 is selected by the controller 170, and the data enable synchronous signal is output (refer to "DE" of FIG. 5) when the input port IN2 is selected by the controller 170.

The noise damper 140 according to an exemplary embodiment of the present invention is connected to the output terminal of the multiplexer 130, and has input and output ports corresponding to a number of bits of the first RGB data. That is, the noise damper 140 can receive the data from the multiplexer 130 through three 10-bit buses. Here, the noise damper 140 can receive one of the first RGB data, the second RGB data and the corresponding data enable synchronous signal from the multiplexer 130.

The noise damper 140 filters noise out of the input video signal according to the control signal of the controller 170. When the analog component signal is selected by a user's selection, the controller 170 generates the control signal for enabling the noise damper 140 to filter off the noise. Thus, the noise damper 140 filters the noise out of the input first RGB data.

On the other hand, when the digital component signal is selected by a user's selection, the controller 170 generates the control signal for disabling the noise damper 140 from filtering the noise from the input second RGB data. Thus, the noise damper 140 passes the input second RGB data and the corresponding enable synchronous signal without filtering.

Meanwhile, the noise damper 140 can receive the horizontal synchronous signal (Hsync), the vertical synchronous signal (Vsync), and the clock synchronous signal (clock) from the A/D converter 110 or the HDMI decoder 120.

The scaler 150 is connected to the output terminal of the noise damper 140, and receives the data from the noise damper 140 through the 10-bit buses. The scaler 150 can receive the first RGB data or the second RGB data from the noise damper 140. Further, the scaler 150 can include input ports (refer to "A0 through A8 and A9" of FIG. 2) for receiving the first RGB data or the second RGB data, and include a control signal input port (refer to "DE" of FIG. 2) for receiving the data enable synchronous signal of the second RGB data. Here, the control signal input port DE of the scaler 150 can be connected to a bus line branched from a bus line connected to the input port A0 allocated for transmitting the data enable synchronous signal among the input ports A0 through A8 and A9 for receiving the first or second RGB data. Therefore, the data enable synchronous signal of the second RGB data can be input to the control signal input port DE.

The scaler 150 processes the first or second RGB data to be properly displayed as a corresponding picture on the display unit 160. Further, the scaler 150 processes the first or second RGB data on the basis of the horizontal synchronous signal (Hsync), the vertical synchronous signal (Vsync) and the clock synchronous signal (clock) received from the noise damper 140. Here, the scaler is described as an example of the video processor according to an exemplary embodiment of the present invention.

The display unit 160 is connected to the scaler 150, and receives the data processed by the scaler 150, thereby displaying a predetermined picture thereon. Here, the display unit 160 includes a plasma display panel (PDP) or the like.

Thus, the second RGB data and the data enable synchronous signal are respectively transmitted as the video signal and the control signal through the surplus buses provided according to a device feature, so that the video signal and the control signal can be synchronized with each other without an additional delaying device, thereby decreasing a production cost of the video processing apparatus.

According to another exemplary embodiment of the present invention, the video processing apparatus 100 can further include a demultiplexer 180. The demultiplexer 180 is interposed between the noise damper 140 and the scaler 150, and selectively transmits the data enable synchronous signal from the noise damper 140 to the input port A0 or the control signal input port DE of the scaler 150 on the basis of the control signal of the controller 170. For example, the controller 170 outputs the control signal to the demultiplexer 180 so that the first RGB data is transmitted to the input port A0 and the data enable synchronous signal is transmitted to the control signal input port DE.

As described above, preferred embodiments of present invention provide a video processing apparatus capable of synchronizing a video signal with a corresponding control signal without increasing a production cost thereof.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A video processing apparatus (100) comprising:
a switching unit (130) which receives a first video signal, a second video signal, and a control signal for the second video signal, and selectively outputs the first or second video signal and the control signal;
a video signal processor (150) which receives the first or second video signal and the control signal output from the switching unit and processes the first or second video signal to be displayed; and
a controller (170) which controls the switching unit to switch an output thereof.

2. The video processing apparatus (100) according to claim 1, wherein the switching unit (130) comprises a multiplexer (130).

3. The video processing apparatus (100) according to claim 1 or claim 2, wherein the video signal processor (150) comprises a scaler (150).

4. The video processing apparatus (100) according to any preceding claim, wherein the control signal includes a synchronous signal for adjusting a position of a picture based on the second video signal.

5. The video processing apparatus (100) according to any preceding claim, further comprising:
an analog-to-digital converter (110) which converts an analog component signal into the first video signal which is received by the switching unit (130); and
a decoder (120) which decodes a digital component signal to generate the second video signal and the control signal which are received by the switching unit.

6. The video processing apparatus (100) according to any preceding claim, further comprising a noise damper (140) which filters noise from the output of the switching unit (130) or passes the output of the switching unit.

7. The video processing apparatus (100) according to claim 6, wherein the noise damper (140) filters the noise from the first video signal output from the switching unit (130), and passes the second video signal output from the switching unit.

8. The video processing apparatus (100) according to claim 6 or claim 7, wherein a number of bits of the second video signal is smaller than a number of bits of the first video signal, and
each of the switching unit (130) and the noise damper (140) comprises input and output ports corresponding to the number of bits of the first video signal, and receives and outputs the first video signal, the second video signal and the control signal in parallel through the input and output ports.

9. The video processing apparatus (100) according to claim 8, wherein the video signal processor (150) comprises video signal input ports corresponding to the number of bits of the first video signal, and a control signal input port corresponding to the control signal; and
the output ports of the noise damper are connected to the video signal input ports of the video signal processor and the output port corresponding to the control signal among the output ports of the noise damper is connected to the control signal input port.

10. The video processing apparatus (100) according to claim 8, wherein the video signal processor (150) comprises video signal input ports corresponding to the number of bits of the first video signal, and a control signal input port corresponding to the control signal;
the output ports of the noise damper, except the output port corresponding to the control signal, are connected to some of the video signal input ports of the video signal processor; and
the video processing apparatus further comprises a demultiplexer (180) which selectively connects the output port corresponding to the control signal among the output ports of the noise damper with either of the video signal input port which is not connected or the control signal input port of the video signal processor.
